# EUROPÄISCHE PATENTSCHRIFT

(11) **EP 1 386 650 B1**
(45) Veröffentlichungstag und Bekanntmachung des Hinweises auf die Patenterteilung: **24.12.2008**
(21) Anmeldenummer: 03017082.3
(22) Anmeldetag: 28.07.2003
(51) Int. Cl.: B01D 17/028, B01D 17/032, B01D 17/025, B01D 17/04, B01D 17/00, B01D 17/02, C02F 1/40, E03F 5/16

(54) **Abscheidersystem zum Abtrennen einer leichteren Phase aus einem Abwasser**
Device to separate a lighter phase from a wastewater.
Dispositif pour séparer une phase plus légère d'une eau usée.

(30) Priorität: 31.07.2002 DE 10234989; 25.09.2002 DE 10244743
(43) Veröffentlichungstag der Anmeldung: 04.02.2004
(73) Patentinhaber: ACO SEVERIN AHLMANN GMBH & CO. KG, 24755 Rendsburg (DE)
(72) Erfinder: Middelhaufe, Axel, 65582 Diez (DE)
(74) Vertreter: Bohnenberger, Johannes

(56) Entgegenhaltungen:
- EP-A- 0 118 021
- EP-A- 0 201 072
- EP-A- 0 308 949
- EP-A- 0 657 195
- DE-A- 3 014 204
- US-A- 4 390 421

## Beschreibung

Die vorliegende Erfindung betrifft ein Abscheidersystem zum Abtrennen einer leichteren Phase und/oder schwererer Bestandteile aus einem Abwasser, bei dem über einen Zulauf das Abwasser in eine Grobabscheiderstufe gelangt, in der sich infolge vorhandener Dichteunterschiede ein großer Teil der leichteren Phase des Abwassers in einem Sammelbehälter und/oder die schwereren Bestandteile des Abwassers in einem Schlammfangraum abscheiden, und ein so abgereichertes Abwasser anschließend über einen Feinabscheiderzulauf in eine Feinabscheiderstufe gelangt, wo der Rest der mechanisch dispergierten leichteren Phase koalesziert, von dem Abwasser getrennt und dem Sammelbehälter zugeführt wird, wobei der Sammelbehälter als eine nach unten offene Speicherglocke ausgeführt ist.

Ein solches Abscheidersystem ist dem Grunde nach aus der Abwasserentsorgungstechnik bekannt, wo Abwässer, die häufig in großen Mengen bei Produktions- und Bearbeitungsprozessen anfallen, vor Ort aufbereitet werden müssen, um sie umweltgerecht in die Kanalisation oder in Gewässer einleiten zu können. Hierbei stellen sogenannte Leichtflüssigkeitsabscheideranlagen eine wichtige Gruppe der Abwasserbehandlungsanlagen, durch die ölhaltige Industrieabwässer zuverlässig aufbereitet werden. In derartigen Anlagen werden wasserunlösliche organische Verschmutzungen, wie Öl und Benzin, sowie eine Vielzahl von Feststoffverunreinigungen aus dem Abwasser entfernt.

Ein Abscheidersystem der eingangs genannten Art ist beispielsweise aus der Druckschrift EP 0 201 072 A2 bekannt. Im einzelnen wird in diesem Stand der Technik ein Leichtflüssigkeitsabscheider beschrieben, welcher eine Grobabscheiderkammer sowie eine Feinabscheiderkammer aufweist. Die Grobabscheiderkammer und die Feinabscheiderkammer sind nebeneinander angeordnet, wobei diese beiden Kammern über einen Durchgangsschacht in Fluidkommunikation stehen. Hierzu ist zwischen der Grobabscheiderkammer und der Feinabscheiderkammer ein Durchgangsschacht angeordnet, welcher an seiner Oberseite zur Feinabscheiderkammer und an seiner Unterseite zur Grobabscheiderkammer hin offen ist.

Die Druckschrift EP 0 118 021 A2 betrifft ein Abscheidersystem, welches ausgelegt ist, nicht nur eine leichtere Phase, sondern auch schwerere Bestandteile aus einem Abwasser abzutrennen. Bei diesem aus dem Stand der Technik bekannten System handelt es sich um ein zweistufig aufgebautes Abscheidersystem, bestehend aus einer Grobabscheiderstufe und einer Feinabscheiderstufe. Diese beiden Kammern sind über einen Gegenschacht miteinander verbunden.

Die Wirkung einer Abscheideranlage basiert darauf, dass eine leichtere Phase, wie etwa Mineralöl, in Wasser weitestgehend nicht physikalisch gelöst, sondern als Dispersion vorliegt. Die Trennung der beiden Komponenten erfolgt nach einer gewissen Zeit gravitativ, indem die leichtere Phase als Tropfen bis zur Abwasseroberfläche aufsteigen und dort eine separate Schicht auf der Oberfläche bilden.

In der Praxis versagt jedoch häufig das oben beschriebene Prinzip, da oftmals die leichtere Phase sehr fein verteilt als kleine Tröpfchen vorliegt, was beispielsweise beim Einsatz von Hochdruckgeräten eintritt. Dann reicht die Verweilzeit in einem normalen Abscheidersystem nicht aus, um die leichtere Phase an die Abwasseroberfläche steigen zu lassen. Zur Aufbereitung derartiger Abwässer werden von daher üblicherweise Koaleszenzabscheider benutzt, welche nach dem Prinzip der Anlagerung von kleinen Tröpfchen an oleophilem Material arbeiten. Dadurch fügen sich die kleinen Tröpfchen zu größeren Tropfen zusammen, steigen auf und bilden einen Film, der sich aus dem Flüssigkeitsgemisch entfernen lässt.

Eine üblicherweise eingesetzte Abscheideranlage besteht aus einem Schlammfang, einem Ölabscheider und gegebenenfalls aus einem Koaleszenzabscheider. Im Schlammfang setzen sich die im Abwasser enthaltenen Sinkstoffe (Schmutz, Sand, etc.) ab. Bei Einlauf des Abwassers in den Schlammfang wird hierfür die Strömung verlangsamt, wodurch die Feststoffe, die schwerer als das Abwasser sind, absinken und sich auf dem Boden des Schlammfangs sammeln. Anschließend erfolgt das Abtrennen der leichteren Phase im eigentlichen Abscheider. Diesem kann ferner ein Koaleszenzabscheider nachgeschaltet sein.

Aus dem Stand der Technik sind die Abscheidersysteme, welche der DIN 1999 entsprechen, bekannt, bei denen sich die abgeschiedene Leichtflüssigkeit an der Oberfläche der zu behandelnden Dispersion aufkonzentriert, wobei in der Regel kein separater Leichtflüssigkeitsspeicher vorgesehen ist. Infolge von Rückstau oder bei Schwimmerabschluss steigt dann die abgeschiedene Leichtflüssigkeit in dem Schacht auf. Von daher müssen die aus dem Stand der Technik bekannten Abscheidersysteme mit einem gegenüber dem nächstgelegenen Ablauf überhöhten Schacht eingebaut, bzw. bei Rückstau mit einer nachgeschalteten Abwasserhebeanlage versehen werden. Bei Überflutung des Abscheidersystems tritt hierbei das Problem auf, dass auch nicht mehr die Überhöhung des Schachtes hilft und die abgeschiedene Leichtflüssigkeit durch die Fugen der Abdeckung des Abscheidersystems austritt.

Um ein Austreten der Leichtflüssigkeit entgegenzuwirken, wird dazu übergegangen, eine separate Ölspeicherkammer im Abscheidersystem zu integrieren, in welche die abgeschiedene Leichtflüssigkeit mittels einer Skimmeinrichtung oder Ähnlichem abgeleitet wird.

Eine derartige, der DIN 1999 entsprechende Abscheideranlage darf grundsätzlich nur mit selbsttätigem Abschluss eingebaut werden, damit ein ungewolltes Austreten der abgetrennten leichteren Phase in die Umwelt verhindert werden kann. Der selbsttätige Abschluss besteht in der Regel aus einem Schwimmer und einer damit verbundenen Verschlusseinrichtung des Abscheiderablaufes. Ferner verlangt die DIN-Norm, dass der Abscheider bei einer abgeschiedenen Menge der leichteren Phase entsprechend 4/5 der Speichermenge und der Schlammfang bei Füllung des halben Schlammfanginhaltes geleert wird.

Das Problem bei den aus dem Stand der Technik bekannten Abscheidersystemen liegt darin, dass Wasser ungewollt in den Speicher des Abscheiders eindringen kann, wodurch dann seine Speicherkapazität unter Umständen stark eingeschränkt wird. Ferner ist ein Austrag der leichteren Phase durch nachträgliche Abscheidung nicht mehr möglich.

Ein weiteres Problem bei dem aus dem Stand der Technik bekannten Abscheidersystemen besteht darin, dass in dem Fall, wo eine zweistufige Abscheidung über einen ersten Grobabscheider und einen nachgeschalteten Koaleszenzabscheider erfolgt, der Betrieb des Abscheidersystems relativ häufig aufgrund von Wartungs- und Reinigungsarbeiten unterbrochen werden muss, da sowohl die Grobabscheiderstufe als auch die Koaleszenzabscheiderstufe separate Speicher zur Aufnahme der abgetrennten leichteren Phase des Abwassers aufweisen. Dieses ist insbesondere bei Abscheidersystemen, welche für den kontinuierlichen Betrieb ausgelegt sind, von wesentlichem Nachteil.

Zur Reinigung der Koaleszenzabscheiderstufe bei einem aus dem Stand der Technik bekannten Abscheidersystem ist es ferner notwendig, das oberflächenaktive Koaleszenzmaterial in großem Umfang zu reinigen, damit die Feinabscheiderstufe des Abscheidersystems ordnungsgemäß arbeiten kann. Dieses erweist sich häufig als ein Problem, da dadurch das gesamte Abscheidersystem für eine lange Wartungszeit außer Betrieb gesetzt wird, wobei diese Wartungs- bzw. Reinigungsarbeiten ferner relativ kostenintensiv sind.

Auf der Grundlage der geschilderten Problemstellung liegt der vorliegenden Erfindung die Aufgabe zugrunde, ein Abscheidersystem der eingangs genannten Art derart weiterzubilden, dass einerseits bei vereinfachter Wartung jederzeit das maximale Speichervolumen für die abgetrennte leichtere Phase des Abwassers garantiert werden kann, und dass andererseits im Störungsfall wirksam ein Zurückhalten der innerhalb der Speicherglocke befindlichen abgeschiedenen leichten Flüssigkeitsanteile im Abscheiderbecken bewirkt wird.

Diese Aufgabe wird mit einem im Patentanspruches 1 angegebenen Abscheidersystem gelöst. Vorteilhafte Weiterbildungen des erfindungsgemäßen Abscheidersystems sind in den abhängigen Patentansprüchen angegeben.

Die erfindungsgemäße Lösung weist eine ganze Reihe wesentlicher Vorteile gegenüber den aus der Abwasserentsorgungstechnik bekannten und vorstehend erläuterten Abscheidersystemen auf. Durch die Ausführung des Sammelbehälters als eine unten offene Speicherglocke wird ständig das maximale Speichervolumen für die abgetrennte leichtere Phase garantiert, da auch ein nachträgliches Wasserabscheiden aus der leichteren Phase nicht dessen Speichervolumen verringert.

Bei dem erfindungsgemäßen Abscheidersystem fließt das zu reinigende Abwasser mit ihrer getrennt zu betrachtenden leichteren Phase und/oder schwereren Bestandteilen in die Grobabscheiderstufe und durchströmt den Abscheideraum. Hier wirken bei ausreichender Verweilzeit die Auf- und Abtriebskräfte und infolge der vorhandenen Dichtunterschiede kommt es zum Abscheidevorgang. Dabei steigen direkt abscheidbare Bestandteile der leichteren Phase unmittelbar nach Strömungsberuhigung an die Flüssigkeitsoberfläche auf und scheiden sich dort ab. Dies geschieht in vorteilhafter Weise im vorderen Bereich des nach unten offenen Sammelbehälters. Die schwereren Bestandteile lagern sich in dem Schlammfangraum ab. In der Speicherglocke bildet sich an der Flüssigkeitsoberfläche ein Film der leichteren Phase, und das derart abgereicherte Abwasser wird permanent der Feinabscheiderstufe zugeführt.

Vorteilhafte Weiterbildungen der Erfindung sind in den Unteransprüchen 2 bis 16 angegeben.

So ist beispielsweise vorgesehen, dass die Feinabscheiderstufe, in welcher der Rest der mechanisch dispergierten leichten Phase koalesziert, von dem Abwasser getrennt und dem Sammelbehälter zugefügt wird, vollständig gekapselt und von der Grobabscheiderstufe getrennt ausgeführt ist. Innerhalb der Feinabscheiderstufe kommt es zur Trennung der noch in dem bereits abgereicherten Abwasser verbliebenen leichteren Phase von dem Abwasser durch eine Koaleszenzbehandlung und die hierbei abgeschiedene leichtere Phase reichert sich im Dom der Feinabscheiderstufe an. Diese Bestandteile gelangen dann, beispielsweise über eine geeignete Rückführleitung, in den Sammelbehälter, während das gereinigte Abwasser abfließt.

Durch die Trennung der Feinabscheiderstufe von der Grobabscheiderstufe wird in dem erfindungsgemäßen Abscheidersystem erreicht, dass keine komplizierten Separations- und Ableitereinrichtungen zum Einsatz kommen, die bei großen Schmutzfrachten in dem Abwasser eine Ableitung in einen separaten Speicher behindern oder unwirksam machen könnte. Die zur Koaleszenzbehandlung eingesetzte Feinabscheiderstufe wird dabei erst dann angewendet, wenn das Abwasser in der Grobabscheiderstufe entsprechend abgereichert wurde, und insbesondere die festen Bestandteile aus dem Abwasser entfernt wurden. Auch sind in der Feinabscheiderstufe keine mechanischen Verschleißteile vorhanden, was das erfindungsgemäße Abscheidersystem im weiteren Sinne nahezu wartungsfrei macht.

Ferner ist in einer Ausführungsform vorgesehen, dass der Zulauf, über dem das Abwasser in die Grobabscheiderstufe gelangt, unterhalb der Speicherglocke mündet. Dadurch kann eine sofortige aufstausichere Speicherung der mitgeführten frei abscheidbaren leichteren Phase in dem Sammelbehälter bewirkt werden. Über den Zulauf, der beispielsweise über ein tiefer gezogenes Tauchrohr realisiert wird, gelangt dabei das Abwasser unter die Speicherglocke in den Schlammfangraum, so dass die mitgeführte frei abscheidbare leichtere Phase aufsteigt und aufstausicher gespeichert werden kann.

Um ein Austragen der abgetrennten leichteren Phase in die Feinabscheiderstufe zu verhindern, ist in vorteilhafter Weise ein im Feinabscheiderzulauf angeordneter Schwimmerverschluss vorgesehen. Der Schwimmerverschluss ermöglicht es, dass über den Feinabscheiderzulauf in die Feinabscheiderkammer permanent das abgereicherte Abwasser von der Oberfläche dieser abgezogen wird. Eine mögliche Realisierung könnte hierbei so aussehen, dass der Schwimmerverschluss als eine selbsttätige Verschlusseinrichtung mit einem dichtetarierten Tandemschwimmer mit mittiger Verschlussplatte ausgeführt ist. Der Tandemschwimmer befindet sich dabei außerhalb des Feinabscheiderzulaufs während ein Verschlussteller direkt im oberen erweiterten Teil des Feinabscheiderzulaufs geführt wird. Durch die Verwendung eines schwimmergesteuerten Verschlusses ist eine selbsttätig wirkende Verschlusseinrichtung vorgesehen, wodurch in besonders vorteilhafter Weise die Anwendung aufwendiger und damit anfälliger mechanischer Übertragungseinheiten zwischen der Grobabscheiderstufe und der Feinabscheiderstufe vermieden werden kann. Denkbar wäre auch, dass der Schwimmerverschluss in den Feinabscheider integriert wird, anstelle ihn im Feinabscheiderzulauf anzuordnen. Hierdurch wird in bevorzugter Weise bei der Durchströmung des Systems am Feinscheiderzulauf eine Senke erzeugt. Anhand dieser Senke bildet sich hier ein Winkel aus, der die an der freien Oberfläche des Systems aufschwimmenden Feinölanteile mit in den Feinabscheider einträgt.

Alternativ zu der zuvor beschriebenen Anordnung des Schwimmerverschlusses im Zulauf zur Feinabscheiderstufe ist bei einer Ausführungsform des erfindungsgemäßen Abscheidersystems eine Abschlussklappe vorgesehen, welche in einem Auslauf der Feinabscheiderstufe zum Tragen kommt. Diese Abschlussklappe wird dabei in vorteilhafter Weise mittels einer Schwimmereinrichtung angesteuert, um somit auf eine besonders leicht zu realisierende Weise besonders effektiv einen Austrag der abgetrennten leichteren Phase zu verhindern. Selbstverständlich sind hier aber auch andere Lösungen zur Ansteuerung der Abschlussklappe denkbar.

Besonders vorteilhaft ist vorgesehen, dass das erfindungsgemäße Abscheidersystem eine im unteren Bereich der Feinabscheiderstufe vorgesehene, durch ein Gitter von einem Separationsraum getrennte Abscheiderkammer aufweist. Diese Einteilung der Feinabscheiderstufe in einen im Dom der Stufe befindlichen Separationsraum und in eine darunter liegende Abscheiderkammer stellt eine besonders einfach zu realisierende und dabei sehr effektive Bauweise dar, um das zugeführte abgereicherte Abwasser einer Koaleszenzbehandlung zu unterwerfen. Dadurch kann mit äußerst geringem Aufwand eine hohe Abwasser-Reinigungsleistung erreicht werden. Die Abtrennung des Separationsraumes von der Abscheiderkammer durch ein Gitter ist ferner von Vorteil, da in der Abscheiderkammer ein Koaleszenzbett ausgebildet werden kann, über welches eine Abscheidung der leichteren Phase aus dem abgereicherten Abwasser in der Feinabscheiderkammer erfolgt.

In einer möglichen Realisierung ist vorgesehen, dass das Koaleszenzbett eine Füllung aus Kugeln mit definiertem Durchmesser und Dichte aufweist. Dieses hat den Vorteil, dass die Feinabscheiderstufe auf Abwässer unterschiedlicher Art bzw. Zusammensetzung optimal eingestellt werden kann. Dies erfolgt z.B. über eine geeignete Wahl der Kugelfüllung für das Koaleszenzbett in der Abscheiderkammer. Dabei kann in vorteilhafter Weise lediglich durch das Austauschen der Kugelfüllung, was bekannterweise keinen besonders großen Wartungsaufwand erfordert, das Koaleszenzbett den jeweiligen Einsatzbedingungen optimal angepasst werden. Selbstverständlich sind hier aber auch andere Lösungen denkbar.

Um in dem Koaleszenzbett ein Wirbelbett des in die Feinabscheiderkammer eintretenden Abwassers zu erzeugen, ist in besonders vorteilhafter Weise ein Verwirbelungsgitter im Zulauf zur Abscheiderkammer vorgesehen. Die Erzeugung eines Wirbelbettes mit dem Effekt der Selbstreinigung unter Ausnutzung der größtmöglichen Kontaktzeit und -fläche hat den Vorteil, dass die Koaleszenzbehandlung des zugeführten Abwasserstromes ohne eine damit verbundene Wartung des Koaleszenzbetts in großem Umfang eingesetzt werden kann. Hierdurch kann auch auf den Einsatz von anderen Ableiteinrichtungen, deren Einsatz zur strömungsgeschwindigkeitsabhängigen Koagulation ohne oberflächenaktives Koaleszenzmaterial sonst notwendig sein würde, verzichtet werden.

In einer vorteilhaften Realisierung ist vorgesehen, dass zur Optimierung der Volumenströme des in der Abscheiderkammer eintretenden Abwassers ein senkrechtes Verteilerblech bzw. -bleche angeordnet ist. Durch diese besonders einfach zu realisierende und wartungsfreie Einrichtung kann in vorteilhafter Weise eine möglichst effektive Koaleszenzbehandlung des Abwassers erreicht werden. Selbstverständlich sind aber auch hier andere Ausführungsformen denkbar.

Besonders vorteilhaft bei dem erfindungsgemäßen Abscheidersystem ist, dass ein Kugelverschluss in einer die Feinabscheiderstufe mit der Speicherglocke verbindenden Steigleitung vorgesehen ist, um eine Rückströmung der in der Speicherglocke abgetrennt vorliegenden leichteren Phase des Abwassers in die Feinabscheiderstufe zu verhindern. Dieser Kugelverschluss dient als eine zusätzliche Sicherheitsabsperrung, die in der Steigleitung wirkt. Bei einer auftretenden Druckerhöhung, beispielsweise durch Flüssigkeitsanstau in dem Abscheidersystem, wird durch den Einsatz des Kugelverschlusses ohne großen mechanischen Aufwand vorgesorgt, dass die bereits abgetrennte leichtere Phase aus dem Sammelspeicher austritt. Der Kugelverschluss stellt dabei eine besonders leicht zu verwirklichende Sicherheitsabsperrung dar.

Des weiteren ist zum kontinuierlichen und vom Füllstand des Sammelbehälters unabhängigen Zuführen der im Separationsraum abgetrennten leichteren Phase zu der im Sammelbehälter gespeicherten abgetrennten leichteren Phase ein vertikal beweglicher Auslaufskimmer an dem speicherglockenseitigen Ende der Steigleitung vorgesehen. Der Auslauf der Steigleitung unter der Speicherglocke wird über diesen vertikal beweglichen schwimmenden Auslaufskimmer ermöglicht, so dass die aufsteigende leichtere Phase immer oberhalb der Flüssigkeitsoberfläche unter der Speicherglocke austritt. Eine Kurzschlussströmung wird dadurch in vorteilhafter Weise verhindert, wobei dieser Auslaufskimmer besonders leicht zu realisieren und wartungsfrei einsetzbar ist. Selbstverständlich ist hierbei aber auch eine andere Anordnung zum Zuführen der leichteren Phase aus der Feinabscheiderstufe in den Sammelbehälter denkbar.

Besonders bevorzugter Weise ist vorgesehen, dass die Speicherglocke eine von der Speicherglockenseite aus schließende Lüftung aufweist, um ein Gaspolster in dem oberen Bereich der Speicherglocke über der abgetrennten leichteren Phase zu gewähren. Diese Gaspolster dient als eine zusätzliche Sicherheitsabsperrung bei einer Druckerhöhung in dem Abscheidersystem. Sollte nämlich aufgrund eines kanalseitigen Rückstaus das rückströmende Abwasser den Feinabscheider passieren und über den Zulauf und den einseitig wirkenden Schwimmerabschluss in die Grobabscheiderstufe austreten, so steigt der Flüssigkeitsspiegel im Gesamtbehälter an, ohne dass das Speichervermögen unter der Speicherglocke beeinträchtigt wird. In Verbindung mit der tiefergezogenen, von der Speicherglockenseite aus schließenden Lüftung der Speicherglocke bleibt immer ein Gaspolster unter dieser bestehen. Damit wird vorteilhafter Weise gesichert, dass bei einem derartigen Störfall die Steigleitung in Verbindung mit ihrem Auslauf oberhalb des Flüssigkeitsspiegels durch den Schwimmskimmer immer einen weit größeren hydraulischen Widerstand besitzt, als der des Feinabscheiderzulaufs. Ein Durchdrücken von Abwasser über die Steigleitung wird dadurch besonders einfach verhindert. Andererseits kann sich bei einem zulaufseitigen Aufstau durch beispielsweise Überlastung verursacht, vor der Feinabscheiderstufe ein Überdruck aufbauen, der ebenfalls zu einem Flüssigkeitsanstieg im gesamten Abscheidersystem führt. Erreicht die Druckdifferenz unter der Speicherglocke und im Inneren der Feinabscheiderstufe einen größeren Wert, so wird das Verschlussgaspolster unter der Speicherglocke über den schwimmenden Auslaufskimmer und die Steigleitung in die Feinabscheiderstufe gepresst. Der nach unten dichtende Kugelverschluss verhindert dabei, dass bei weiterem Druckanstieg auch die abgetrennte leichtere Phase auf diesem Wege die Feinabscheiderstufe gedrückt werden kann. Solange die Steigleitung mit Flüssigkeit gefüllt ist, befindet sich die Kugel in Schwimmlage bei offenem Durchlass. Gelangt das Gaspolster zu dieser Verschlusseinrichtung, sinkt die Kugel ab und verhindert einen Gasdurchtritt. Durch die Wechselwirkung Kugelverschluss-schwimmender Auslaufskimmer-Gaspolster ist somit in besonders vorteilhafter Weise eine beidseitig wirkende Verschlusseinrichtung ohne großen mechanischen Aufwand angegeben.

Eine vorteilhafte, wenngleich aus Abscheidersystemen teilweise bekannte Weiterbildung der vorliegenden Erfindung besteht darin, dass in der Speicherglocke ein Füllstandsensor zur Füllstandkontrolle angeordnet ist. Die Vorteile einer solchen Anordnung liegen insbesondere in dem sicheren und störungsfreien Überprüfen des Füllstands der abgetrennten leichteren Phase in der Speicherglocke, um den Zeitpunkt einer notwendigen Leerung der Speicherglocke genau zu erfassen.

Zum Erzielen eines kompakten Abscheidersystems ist des weiteren in vorteilhafter Weise vorgesehen, dass zur Entnahme der abgetrennten leichteren Phase aus der Speicherglocke eine Saugleitung vorgesehen ist. Diese fest eingebaute Saugleitung dient insbesondere auch dazu, die Bedienbarkeit und Wartung des Abscheidersystems zu vereinfachen.

Durch die Anordnung einer Auslaufklappe zum Leeren und/oder Spülen der Grobabscheiderkammer am Schlammfangraum der Grobabscheiderstufe wird ferner besonders vorteilhaft ein Abscheidersystem angegeben, welches zum Betrieb einen geringen Wartungsaufwand erfordert.

Im Folgenden wird ein bevorzugtes Ausführungsbeispiel des erfindungsgemäßen Abscheidersystems anhand zweier Zeichnungen erläutert.

Es zeigen:
- Fig. 1: eine Querschnitts-Seitenansicht eines bevorzugten Ausführungsbeispiels des erfindungsgemäßen Abscheidersystems; und
- Fig. 2: eine Draufsicht auf das Ausführungsbeispiel gemäß Fig. 1.

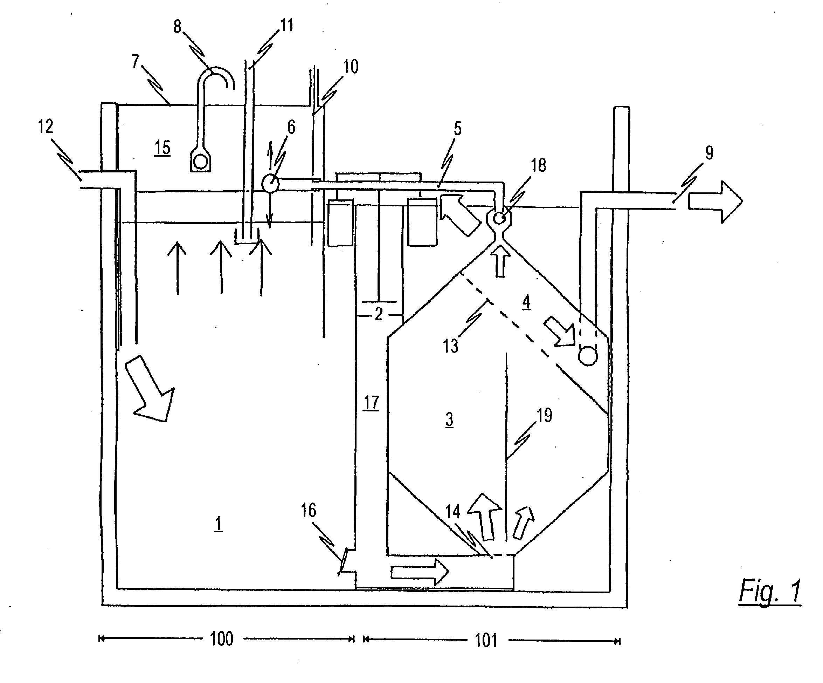

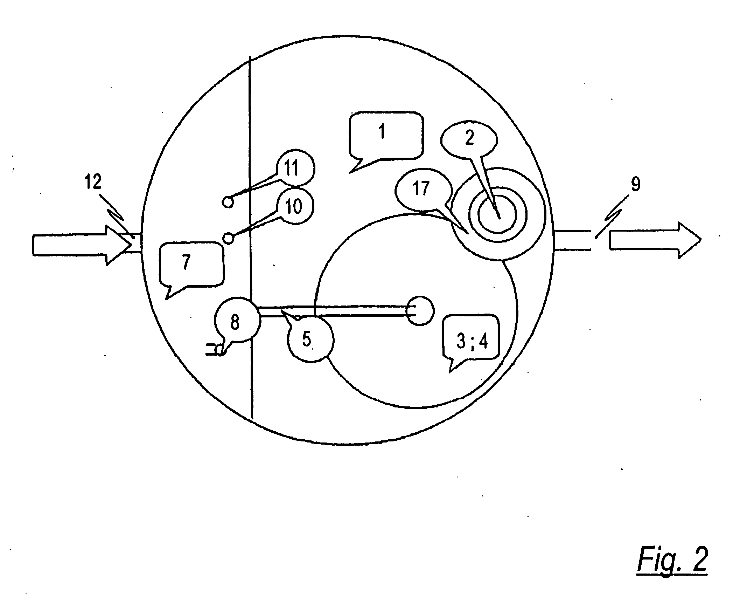

Figur 1 zeigt eine Querschnitts-Seitenansicht eines bevorzugten Ausführungsbeispiels des erfindungsgemäßen Abscheidersystems und Figur 2 eine entsprechende Draufsicht. Das Abscheidersystems setzt sich aus einer Grobabscheiderstufe 100 und einer nachgeschalteten Feinabscheiderstufe 101 zusammen, die vollständig gekapselt und von der Grobabscheiderstufe 100 getrennt ausgeführt ist. Über einen Zulauf 12 gelangt ein Abwasser, welches eine leichtere Phase und/oder schwerere Bestandteile enthält, in die Grobabscheiderstufe 100. Eine derartiges Abwasser ist beispielsweise Mineralöl verschmutztes Abwasser, in dem Sinkstoffe, wie etwa Schmutz, Sand oder Schlamm enthalten sind.

Die leichtere Phase bzw. das Öl des Abwassers wird in dem Abwasser weitestgehend nicht physikalisch gelöst, sondern liegt als Gemisch mehr oder weniger großer Tropfen vor. Da Öl (bzw. die leichtere Phase) und die andere Phase des Abwassers eine unterschiedliche Dichte haben, werden die beiden Komponenten nach einer gewissen Zeit gravitativ wieder getrennt, d.h. die leichtere Phase steigt in Form von Tröpfchen bis zur Oberfläche auf und bilden eine Schicht auf dieser. Hierauf beruht die Wirkung der Grobabscheiderstufe 100. Die Durchflussgeschwindigkeit des Abwassers ist bei dem erfindungsgemäßen Abscheidersystem so ausgelegt, dass die Verweilzeit dieser in der Grobabscheiderstufe 100 für die beschriebene Trennung der Öl- (bzw. leichteren Phase) von dem Abwasser ausreichend ist, so dass der Gehalt der leichteren Phase in dem abgereicherten Abwasser unterhalb der in der DIN 1999 festgelegten Grenzwerte liegt.

Die Grobabscheiderstufe 100 besteht aus einer Speicherglocke 7, die als Sammelbehälter der abgetrennten leichteren Phase dient, und einem Schlammfangraum 1. Im Schlammfangraum 1 setzen sich die in dem Abwasser enthaltenen Sinkstoffe ab. Beim Einlauf des Abwassers in die Grobabscheiderstufe 100 wird die Strömung verlangsamt, wodurch die Feststoffe, die schwerer als das Abwasser sind, absinken und sich auf dem Boden des Schlammfangraumes 1 ansammeln. Der Schlammfangraum 1 des erfindungsgemäßen Abscheidersystems ist hierbei von innen entsprechend beschichtet, dass er vollständig öldicht ist, um das Austreten von Öl zu verhindern. In der Grobabscheiderstufe 100 steigen die direkt abscheidbaren Bestandteile der leichteren Phase unmittelbar nach Strömungsberuhigung an die Flüssigkeitsoberfläche auf und scheiden sich dort ab. Dies geschieht im vorderen Bereich der nach unten offenen Speicherglocke 7.

Der Raum (1) unterhalb der Speicherglocke (7), in den der Zulauf (12) mündet, dient als kombinierter Abscheideraum für grob disperse und somit direkt abscheidbare Leichtflüssigkeitsanteile und Sinkstoffe. Dadurch werden die grob dispersen Leichtflüssigkeitstropfen bereits in diesem Teil abgeschieden. Sie steigen innerhalb der Speicherglocke (7) auf und sammeln sich an der Flüssigkeitsoberfläche. Gleichzeitig dient der untere Teil des Raumes (1) als Sinkstoffsammelraum.

Bei sehr fein verteilten, kleinen Tröpfchen der in dem Abwasser enthaltenen leichteren Phase, was beispielsweise durch den Einsatz von Hochdruck-Geräten auftritt, versagt das oben beschriebene Prinzip, da aufgrund der geringen Größe Tropfen die Verweilzeit in der Grobabscheiderstufe 100 nicht ausreichend ist, um diese an die Abwasseroberfläche steigen zu lassen. Hier wird zur Abtrennung ein physikalischer Effekt genutzt, der bewirkt, dass sich die fein verteilten Tröpfchen der leichteren Phase auf speziellen Oberflächen anlagern und schließlich zu einem Film zusammenfügen können, d.h. sie koaleszieren. Diese Koaleszenzbehandlung erfolgt in der Feinabscheiderstufe 101. Dabei reist nach Erreichen einer gewissen Schichtdicke der Film ab und bildet einen größeren Tropfen, der in dem Abwasser aufsteigt und abgeschieden wird.

Nachdem sich ferner der Schlamm in dem Schlammfangraum 1 abgelagert hat, gelangt das derart abgereicherte Abwasser über einen Feinabscheiderzulauf 17 in die Feinabscheiderstufe 101. Die Zufuhr des abgereicherten Abwassers in die Feinabscheiderstufe 101 erfolgt dabei permanent und kontinuierlich. Der Feinabscheiderzulauf 17 ist zusätzlich mit einer selbsttätigen Verschlusseinrichtung 2 versehen, um einen Austrag der in der Grobabscheiderstufe 100 abgetrennten leichteren Phase zu verhindern.

Das abgereicherte Abwasser gelangt dann zur Koaleszenzbehandlung in die Feinabscheiderstufe 101. Diese weist im wesentlichen eine Abscheiderkammer 3 und einen im Dom dieser angeordneten Separationsraum 4 auf. Dabei ist der Separationsraum 4 von der Abscheiderkammer 3 durch ein Gitter 13 getrennt. Die Abscheiderkammer 3 umfasst ein Koaleszenzbett, welches beispielsweise aus einer Füllung aus Kugeln mit definiertem Durchmesser und Dichte besteht. Die Dimensionierung dieser Kugeln erfolgt in Abhängigkeit des zu reinigenden Abwassers. Besonders vorteilhaft ist, dass der Zulauf des Abwassers in die Abscheiderkammer 3 über ein Verwirbelungsgitter 14 erfolgt, um hierdurch das Abwasser zu verwirbeln und ein entsprechendes Wirbelbett zu erzeugen. Dadurch kann erreicht werden, dass das in der Abscheiderkammer 3 angeordnete Koaleszenzbett nahezu wartungsfrei und selbstreinigend ist. Zur Optimierung der Koaleszenzbehandlung durch eine Lenkung der Volumenströme des abgereicherten Abwassers in der Abscheiderkammer 3 ist ein senkrechtes Verteilerblech 19 in der Abscheiderkammer 3 vorgesehen. Ferner weist die Abscheiderkammer 3 eine trichterförmig aufgeweitete Formgebung auf, um hiermit den Verwirbelungseffekt, welcher über das Verwirbelungsgitter 14 erzeugt wird, durch die trichterförmige Vergrößerung des Fließquerschnitts zu begünstigen. Die Feinabscheiderstufe 101 ist dadurch gekennzeichnet, dass durch die optimale Strömungsgestaltung in der Abscheiderkammer 3 Koagulationseffekte erzielt und Anteile der leichteren Phase in direkt abscheidbare Fraktionen gewandelt werden. In einer Zone der Strömungsberuhigung innerhalb der Feinabscheiderstufe kommt es zur Trennung dieser direkt abscheidbaren Bestandteile und deren Anreicherung in dessen Dom bzw. im Separationsraum 4.

Im oberen Bereich der Abscheiderkammer 3 angeordneten Separationsraum 4, welcher von der Abscheiderkammer 3 durch das Gitter 13 getrennt ist, erfolgt eine Abscheidung der durch Koagulation und Koaleszenzeffekte entstandenen frei abscheidbaren leichteren Phase. Dies erfolgt durch den dichtebedingten Aufstieg der leichteren Phase in den Behälterdom der Abscheiderkammer 3 bzw. in den Separationsraum 4, während das vollständig abgereicherte Abwasser über einen weitaus tiefer liegenden Auslauf 9 aus der Feinabscheiderstufe 101 und aus dem gesamten Abscheidersystem strömt.

Die in der Feinabscheiderstufe 101 abgeschiedene leichtere Phase gelangt über eine Steigleitung 5 in die Speicherglocke 7 und wird dort mit der bereits in der Grobabscheiderstufe 101 abgetrennten leichteren Phase aufstausicher zurückgehalten.

Dadurch, dass der Feinabscheiderstufe 101 eine Grobabscheiderstufe 100 vorgeschaltet ist, sind keine komplizierten Separations- und Ableiteinrichtungen vorhanden, die bei großen Schmutzfrachten eine Ableitung der leichteren Phase in einen separaten Speicher behindert oder unwirksam machen können. Dieses ermöglicht es, dass keine mechanischen Verschleißteile in dem erfindungsgemäßen Abscheidersystem vorhanden sind, wodurch dieses in vorteilhafter Weise nahezu wartungsfrei einsetzbar ist.

Die im Separationsraum 4 abgetrennte leichtere Phase gelangt über die Steigleitung 5 in die Speicherglocke 7. Der Auslauf der Steigleitung 5 unter der Speicherglocke wird dabei über einen vertikal beweglichen, schwimmenden Auslaufskimmer 6 hergestellt, so dass die aufsteigende leichtere Phase immer oberhalb der Flüssigkeitsoberfläche unter der Speicherglocke 7 austritt. Dadurch wird eine Kurzschlussströmung verhindert. Zusätzlich wirkt eine Sicherheitsabsperrung in Form eines Kugelverschlusses 18 in der Steigleitung 5.

Eine möglicherweise auftretende Druckerhöhung, beispielsweise durch Flüssigkeitsanstau in dem Abscheidersystem, kann durch Rückstau vom Kanalnetz her, d.h. vom Ablauf 9 oder vom Zulauf 12, infolge Überlastung bzw. Wirksamwerden der selbsttätigen schwimmergesteuerten Verschlusseinrichtung 2 erfolgen. Tritt ein Rückstau vom Kanal her auf, so passiert das rückströmende Abwasser die Feinabscheiderstufe 101 und tritt über den Feinabscheiderzulauf 17 und den einseitig wirkenden Schwimmerverschluss 2 in die Grobabscheiderstufe 100 aus. Der Flüssigkeitsspiegel in der Grobabscheiderstufe 100 steigt an, ohne dass das Speichervermögen unter der Speicherglocke 7 beeinträchtigt wird. In Verbindung mit einer tiefergezogenen, von unten abschließenden Lüftung 8 der Speicherglocke 7 bleibt immer ein Gaspolster 15 unter dieser bestehen. Damit wird gesichert, dass in diesem Störungsfall die Steigleitung 5 in Verbindung mit deren Auslauf oberhalb des Flüssigkeitsspiegels durch den Schwimmskimmer 6, immer einen weit größeren hydraulischen Widerstand besitzt, als der Zulauf 17 zur Feinabscheiderstufe 101. Ein Durchdrücken von Abwasser über die Steigleitung 5 wird dadurch verhindert.

Bei einem zulaufseitigen Aufstau hingegen, was beispielsweise durch Überlastung des Abscheidersystems eintreten mag, baut sich vor der Feinabscheiderstufe 101 ein Überdruck auf, der ebenfalls zu einem Flüssigkeitsanstieg im Abscheidersystem führt. Erreicht die Druckdifferenz unter der Speicherglocke 7 und dem Inneren der Feinabscheiderstufe 101 einen größeren Wert, so wird das Verschlussgaspolster 15 unter der Speicherglocke 7 über den schwimmenden Auslaufskimmer 6 und die Steigleitung 5 in die Feinabscheiderstufe 101 gepresst. Um zu verhindern, dass bei weiterem Druckanstieg auch abgetrennte leichtere Phase auf diesem Wege in die Feinabscheiderstufe 101 gedrückt werden kann, ist der nach unten dichtender Kugelverschluss 18 in der Steigleitung 5 angeordnet. Solange die Steigleitung 5 mit Flüssigkeit gefüllt ist, befindet sich die Kugel in Schwimmlage bei offenem Durchlass. Gelangt jedoch das Gaspolster 15 zu dieser Verschlusseinrichtung 18, sinkt die Kugel ab und verhindert einen Gasdurchtritt. Durch die Wechselwirkung Kugelverschluss-schwimmender Auslaufskimmer-Gaspolster wird somit eine beidseitig wirkende Verschlusseinrichtung ohne großen mechanischen Aufwand erreicht.

Die unter der Speicherglocke 7 aufstausicher gesammelte, leichtere Phase kann mittels einer Saugleitung 11 separat annähernd abwasserfrei entnommen werden. Eine Füllstandkontrolle kann ferner mit einem entsprechenden Messstab 10 erfolgen.

-Das in den Figuren 1 und 2 gezeigte Abscheidersystem umfasst ferner eine am unteren Teil der Grobabscheiderkammer befindliche selbsthaltende Auslaufklappe 16, welche zum Leeren und Spülen der Grobabscheiderkammer 101 eingesetzt werden kann. Im Betriebszustand ist diese Klappe 16 geschlossen und wird zusätzlich durch sich bildende Schlammablagerungen am Boden des Schlammfangraumes 1 gedichtet.

Die wesentlichen Punkte bei dem in Figur 1 gezeigten Ausführungsbeispiel des erfindungsgemäßen Abscheidersystems sind, dass durch die unten offene Speicherglocke 7 grundsätzlich eine abgetrennte leichtere Phase enthält, wobei eine nachträgliche Wasserabscheidung aus der leichteren Phase nicht das Speichervolumen der Speicherglocke 7 verringert.

Des Weiteren bedingt der unterhalb der Speicherglocke 7 angeordnete Zulauf 12, beispielsweise durch ein tiefergezogenes Tauchrohr realisiert, die sofortige aufstausichere Speicherung mitgeführter frei abtrennbarer leichterer Phasen in dem Abwasser. Erst bei Überschreiten des Fassungsvermögens der Speicherglocke 7 tritt die leichtere Phase an die freie Flüssigkeitsoberfläche und sichert ein weiteres jedoch nicht aufstaugesichertes Havariespeichervolumen. Die Unterkante der Speicherglocke befindet sich etwa 20 cm oberhalb des Ablaufanschlusses zur Feinabscheiderkammer 101.

Durch den bewährten tarierten Schwimmerverschluss 2 bereits im Zulauf 17 der vollständig von der Grobabscheiderstufe 100 gekapselten Feinabscheiderstufe 101 wird wirksam ein Austrag leichterer Phase verhindert.

Denkbar wäre hier jedoch auch, den Schwimmverschluss (2) nicht im Feinabscheiderzulauf (17) anzuordnen, sondern ihn in den Feinabscheider (101) zu integrieren, um bei der Durchströmung des Systems am Feinabscheiderzulauf (17) eine Senke zu erzeugen, damit sich hier ein Wirbel ausbildet, der die an der freien Oberfläche des Systems aufschwimmenden Feinölanteile mit in den Feinabscheider (101) einträgt.

Die barrierefreie Steigleitung 5 aus dem Separationsraum 4 zur Speicherglocke 7 sichert einen wartungs- und störungsfreien Betrieb. Eine Kurzschlussströmung im Störungsfall ist dabei durch den schwimmenden Auslaufskimmer 6 im verbleibenden Gaspolster 15 unter der Speicherglocke 7 und dem Kugelverschluss 11 ausgeschlossen.

Wesentlich bei dem erfindungsgemäßen Abscheidersystem ist ferner, dass eine Separation der leichteren Phase ohne Aufteilung und Ableitung von Teilflüssigkeitsströmen, sondern nur durch das Auffangen der leichteren Phase unmittelbar im Entstehungsbereich und anschließender Aufstau gesicherter Zusammenführung und Speicherung erfolgt. Dadurch kann auf eine permanente Ableitung eines Teilflüssigkeitsstromes von der Flüssigkeitsoberfläche im Abscheider durch Ausnutzung eingerichteter vergrößerter Gefällepotentiale, sog. Bypass-Leitungen, gegenüber der Prüfoder Betriebsdurchströmung verzichtet werden. Die damit erzielten Teilströme dienen lediglich dem Zweck des Austrages der leichteren Phase, ohne dass mit diesem Anteil eine Abscheidebehandlung erfolgt. Dadurch wird erreicht, dass mittels des erfindungsgemäßen Abscheidersystems die Effektivität unabhängig von der Wasserbeaufschlagung des Systems optimiert wird.

Obwohl in den Figuren nicht dargestellt, ist ferner denkbar, eine integrierte Probenentnahme in dem Abscheidersystem einzusetzen. Ferner ist unter Umständen ein Spülanschluss am oberen Teil der Feinabscheiderstufe 101 sinnvoll. Zur Überwachung der Schichtdicke der abgetrennten leichteren Phase unter der Speicherglocke 7 sowie zur Aufstauüberwachung des Gesamtabscheiders könnte ferner eine Alarmanlage eingesetzt werden. Als Beispiel eines Koaleszenzbettes in der Abscheiderkammer 3 käme ein Fließbett aus einem Kunststoffmaterial in Kugelform (4 bis 5 cm Durchmesser) mit einem spezifischen Gewicht kurz oberhalb dessen von Wasser in Frage, wodurch der Effekt der strömungsgeschwindigkeitsabhängigen Koagulation mit der davon unabhängigen Koaleszenz verbunden wird. Selbstverständlich sind hier aber auch andere Optionen zur Erweiterung denkbar.

### Bezugszeichenliste

- 1: Schlammfangraum
- 2: Schwimmerverschluss
- 3: Abscheiderkammer
- 4: Separationsraum
- 5: Steigleitung
- 6: Auslaufskimmer
- 7: Speicherglocke
- 8: Lüftung
- 9: Auslauf
- 10: Füllstandsensor
- 11: Saugleitung
- 12: Zulauf
- 13: Gitter
- 14: Verwirbelungsgitter
- 15: Gaspolster
- 16: Auslaufklappe
- 17: Feinabscheiderzulauf
- 18: Kugelverschluss
- 19: Verteilerblech
- 100: Grobabscheiderstufe
- 101: Feinabscheiderstufe

## Patentansprüche

1. Abscheidersystem zum Abtrennen einer leichteren Phase und/oder schwererer Bestandteile aus einem Abwasser, bei dem über einen Zulauf (12) das Abwasser in eine Grobabscheiderstufe (100) gelangt, in der sich infolge vorhandener Dichteunterschiede ein großer Teil der leichteren Phase des Abwassers in einem Sammelbehälter (7) und/oder die schwereren Bestandteile des Abwassers in einem Schlammfangraum (1) abscheiden, und ein so abgereichertes Abwasser anschließend über einen Feinabscheiderzulauf (17) in eine Feinabscheiderstufe (101) gelangt, wo der Rest der mechanisch dispergierten leichteren Phase koalesziert, von dem Abwasser getrennt und dem Sammelbehälter (7) zugeführt wird, wobei der Sammelbehälter (7) als eine nach unten offene Speicherglocke ausgeführt ist,
**dadurch gekennzeichnet, dass**
die Feinabscheiderstufe (101) vollständig gekapselt und von der Grobabscheiderstufe (100) getrennt ausgeführt ist.

2. Abscheidersystem nach Anspruch 1,
wobei der Zulauf (12) unterhalb der Speicherglocke (7) mündet.

3. Abscheidersystem nach Anspruch 1 oder 2,
welches ferner einen in der Feinabscheiderstufe (101) integrierten Schwimmerverschluss (2) zum Verhindern eines Austrags der abgetrennten leichteren Phase aufweist.

4. Abscheidersystem nach Anspruch 1 oder 2,
welches ferner eine in einem Auslauf (9) der Feinabscheiderstufe (101) angeordnete Abschlussklappe aufweist, welche über eine Schwimmereinrichtung oder ähnlichem angesteuert wird, um einen Austrag der abgetrennten leichteren Phase zu verhindern.

5. Abscheidersystem nach einem der vorhergehenden Ansprüche,
welches ferner eine im unteren Bereich der Feinabscheiderstufe (101) vorgesehene, durch ein Gitter (13) von einem Separationsraum (4) getrennte Abscheiderkammer (3) aufweist.

6. Abscheidersystem nach Anspruch 5,
welches ferner ein in der Abscheiderkammer (3) ausgebildetes Koaleszenzbett aufweist.

7. Abscheidersystem nach Anspruch 6,
wobei das Koaleszenzbett eine Füllung aus Kugeln mit definiertem Durchmesser und Dichte aufweist.

8. Abscheidersystem nach einem der vorhergehenden Ansprüche,
welches ferner ein Verwirbelungsgitter (14) im Zulauf zur Abscheiderkammer (3) zum Erzeugen eines Wirbelbettes durch Verwirbeln der in die Abscheiderkammer (3) eintretenden Suspension aufweist.

9. Abscheidersystem nach einem der vorhergehenden Ansprüche,
welches ferner ein senkrechtes Verteilerblech (19) in der Abscheiderkammer (3) zur Optimierung von Volumenströmen der Suspension aufweist.

10. Abscheidersystem nach einem der vorhergehenden Ansprüche,
welches ferner eine vom Feinabscheiderzulauf aus, trichterförmig sich ausweitende Formgebung der Feinabscheiderstufe (101) aufweist.

11. Abscheidersystem nach einem der vorhergehenden Ansprüche,
welches ferner einen Kugelverschluss (19) in der die Feinabscheiderstufe (101) mit der Speicherglocke (7) verbindenden Steigleitung (5) zum Verhindern einer Rückströmung der in der Speicherglocke (7) abgetrennt vorliegenden leichteren Phase der Suspension in die Feinabscheiderstufe (101) aufweist.

12. Abscheidersystem nach einem der vorhergehenden Ansprüche,
wobei die Steigleitung (5) an ihrem speicherglockenseitigen Ende einen vertikal beweglichen Auslaufskimmer (6) derart aufweist, dass die im Separationsraum (4) abgetrennte leichtere Phase der Suspension unabhängig vom Füllstand des Sammelbehälters (7) stets der abgetrennten leichteren Phase der Suspension im Sammelbehälter (7) zugeführt wird.

13. Abscheidersystem nach einem der vorhergehenden Ansprüche,
wobei die Speicherglocke (7) eine von der Speicherglockenseite aus schließende Lüftung (8) aufweist, um ein Gaspolster (15) in dem oberen Bereich der Speicherglocke (7) über der abgetrennten leichteren Phase zu gewähren.

14. Abscheidersystem nach einem der vorhergehenden Ansprüche,
welches ferner einen Füllstandsensor (10) zur Füllstandskontrolle der leichteren Phase in der Speicherglocke (7) aufweist.

15. Abscheidersystem nach einem der vorhergehenden Ansprüche,
welches ferner eine Saugleitung (11) zur Entnahme der abgetrennten leichteren Phase aus der Speicherglocke (7) aufweist.

16. Abscheidersystem nach einem der vorhergehenden Ansprüche,
wobei der Schlammfangraum (1) der Grobabscheiderstufe (100) eine Auslaufklappe (16) zum Leeren und/oder Spülen der Grobabscheiderkammer (100) aufweist.

## Claims

1. Separator system for separating off a lighter phase and/or heavier constituents from a waste water, in which via a feed (12) the waste water passes into a coarse separator stage (100), in which as a result of existing density differences, a large part of the lighter phase of the waste water is separated in a collecting container (7) and/or the heavier constituents of the waste water are separated in a sludge trap chamber (1), and a waste water thus depleted then passes via a fine separator feed (17) into a fine separator stage (101) where the remainder of the mechanically dispersed lighter phase is coalesced, separated from the waste water and fed to the collecting container (7), wherein the collecting container (7) is designed as a storage bell jar which is open at the bottom, **characterised in that** the fine separator stage (101) is completely encapsulated and designed to be separate from the coarse separator stage (100).

2. Separator system according to claim 1, wherein the feed (12) emerges below the storage bell jar (7).

3. Separator system according to claim 1 or 2, which also has a float closure (2) integrated in the fine separator stage (101) for preventing discharge of the separated-off lighter phase.

4. Separator system according to claim 1 or 2, which also has a closure flap arranged in an outlet (9) of the fine separator stage (101) and which is controlled via a float device or similar to prevent discharge of the separated- off lighter phase.

5. Separator system according to one of the preceding claims, which also has a separator chamber (3) provided in the lower region of the fine separator stage (101) and separated from a separation chamber (4) by a grid (13).

6. Separator system according to claim 5, which also has a coalescence bed formed in the separator chamber (3).

7. Separator system according to claim 6, wherein the coalescence bed has a filling comprising spheres having defined diameter and density.

8. Separator system according to one of the preceding claims, which also has a vortexing grid (14) in the feed to the separator chamber (3) to produce a fluidised bed by vortexing of the suspension entering into the separator chamber (3).

9. Separator system according to one of the preceding claims, which also has a vertical distributor plate (19) in the separator chamber (3) to optimise volumetric rates of flow of the suspension.

10. Separator system according to one of the preceding claims, which also has a design of the fine separator stage (101) which expands like a funnel starting from the fine separator feed.

11. Separator system according to one of the preceding claims, which also has a ball closure (19) in the riser (5) connecting the fine separator stage (101) to the storage bell jar (7) to prevent back-flow of the lighter phase of the suspension which exists separated-off in the storage bell jar (7) into the fine separator stage (101).

12. Separator system according to one of the preceding claims, wherein the riser (5) has at its end on the storage bell jar side, a vertically movable outlet skimmer (6) such that the lighter phase of the suspension separated off in the separation chamber (4) is always fed to the separated-off, lighter phase of the suspension in the collecting container (7) independently of the level of the collecting container (7).

13. Separator system according to one of the preceding claims, wherein the storage bell jar (7) has venting (8) closing from the storage bell jar side to provide a gas cushion (15) in the upper region of the storage bell jar (7) above the separated-off lighter phase.

14. Separator system according to one of the preceding claims, which also has a level sensor (10) to monitor the level of the lighter phase in the storage bell jar (7).

15. Separator system according to one of the preceding claims, which also has a suction pipe (11) to remove the separated-off, lighter phase from the storage bell jar (7).

16. Separator system according to one of the preceding claims, wherein the sludge trap chamber (1) of the coarse separator stage (100) has an outlet flap (16) to empty and/or flush the coarse separator chamber (100).

## Revendications

1. Système séparateur pour séparer une phase plus légère et/ou des composants plus lourds d'une eau usée, dans lequel l'eau usée parvient par le biais d'une arrivée (12) à une étape de séparation grossière (100), dans laquelle, du fait de l'existence de différences de densité, une grande partie de la phase plus légère de l'eau usée se sépare dans un récipient collecteur (7) et/ou les composants plus lourds de l'eau usée se séparent dans un espace de piégeage des boues (1), et l'eau usée ainsi débarrassée parvient ensuite, en passant par une arrivée de séparation fine (17), à une étape de séparation fine (101), où le reste de la phase plus légère dispersée mécaniquement entre en coalescence, est séparé de l'eau usée et est dirigé dans le récipient collecteur (7), où le récipient collecteur (7) prend la forme d'une cloche de stockage ouverte vers le bas,
**caractérisé en ce que**
l'étape de séparation fine (101) est exécutée entièrement en encapsulation et séparément de l'étape de séparation grossière (100).

2. Système séparateur selon la revendication 1, dans lequel l'arrivée (12) débouche en dessous de la cloche de stockage (7).

3. Système séparateur selon la revendication 1 ou 2, qui présente également une fermeture à flotteur (2) intégrée dans l'étape de séparation fine (101) pour empêcher une extraction de la phase plus légère séparée.

4. Système séparateur selon la revendication 1 ou 2, qui présente également un clapet obturateur disposé dans une évacuation (9) de l'étape de séparation fine (101), qui est commandé par le biais d'un dispositif à flotteur ou similaire pour empêcher une extraction de la phase plus légère séparée.

5. Système séparateur selon l'une des revendications précédentes, qui présente en outre une chambre de séparation (3) séparée par une grille (13) d'une chambre de scission (4), prévue dans la zone inférieure de l'étape de séparation fine (101).

6. Système séparateur selon la revendication 5, qui présente en outre un lit de coalescence formé dans la chambre de séparation (3).

7. Système séparateur selon la revendication 6, dans lequel le lit de coalescence présente un chargement de billes ayant un diamètre et une densité définis.

8. Système séparateur selon l'une des revendications précédentes, qui présente en outre une grille de fluidisation (14) dans l'arrivée menant à la chambre de séparation (3) pour produire un lit fluidisé par fluidisation de la suspension entrant dans la chambre de séparation (3).

9. Système séparateur selon l'une des revendications précédentes, qui présente en outre une tôle de distribution verticale (19) dans la chambre de séparation (3) pour optimiser les flux volumiques de suspension.

10. Système séparateur selon l'une des revendications précédentes, qui présente en outre une forme d'étape de séparation fine (101) s'élargissant à la manière d'un entonnoir depuis l'arrivée de la séparation fine.

11. Système séparateur selon l'une des revendications précédentes, qui présente en outre une fermeture à billes (19) dans la conduite ascendante (5) raccordant l'étape de séparation fine (101) et la cloche de stockage (7) pour empêcher un reflux de la phase plus légère de la suspension, présente sous forme séparée dans la cloche de stockage (7), dans l'étape de séparation fine (101).

12. Système séparateur selon l'une des revendications précédentes, dans lequel la conduite ascendante (5) présente, sur son extrémité située du côté cloche de stockage, un écrémeur d'évacuation (6) mobile verticalement de sorte que la phase plus légère de la suspension, séparée dans la chambre de scission (4), soit toujours dirigée vers la phase plus légère séparée de la suspension dans le récipient collecteur (7), indépendamment du niveau du récipient collecteur (7).

13. Système séparateur selon l'une des revendications précédentes, dans lequel la cloche de stockage (7) présente une aération (8) fermant depuis le côté de la cloche de stockage pour obtenir un tampon de gaz (15) dans la zone supérieure de la cloche de stockage (7) au-dessus de la phase plus légère séparée.

14. Système séparateur selon l'une des revendications précédentes, qui présente en outre un détecteur de niveau (10) pour le contrôle du niveau de la phase plus légère dans la cloche de stockage (7).

15. Système séparateur selon l'une des revendications précédentes, qui présente en outre une conduite aspirante (11) pour le prélèvement de la phase plus légère séparée hors de la cloche de stockage (7).

16. Système séparateur selon l'une des revendications précédentes, dans lequel l'espace de piégeage des boues (1) de l'étape de séparation grossière (100) présente un clapet d'évacuation (16) pour la vidange et/ou le rinçage de la chambre de séparation grossière (100).
